# EUROPÄISCHE PATENTSCHRIFT

(11) **EP 1 851 974 B1**
(45) Veröffentlichungstag und Bekanntmachung des Hinweises auf die Patenterteilung: **01.10.2008**
(21) Anmeldenummer: 06722545.8
(22) Anmeldetag: 24.02.2006
(51) Int. Cl.: H04N 13/00, G02B 27/22

(54) **VERFAHREN UND EINRICHTUNG ZUM NACHFÜHREN VON SWEET-SPOTS**
METHOD AND DEVICE FOR TRACKING SWEET SPOTS
PROCEDE ET DISPOSITIF D'AJUSTEMENT DE POINTS IDEAUX

(30) Priorität: 25.02.2005 DE 102005010250; 17.08.2005 DE 102005040597
(43) Veröffentlichungstag der Anmeldung: 07.11.2007
(73) Patentinhaber: SeeReal Technologies GmbH, 01307 Dresden (DE)
(72) Erfinder: AMROUN, Sebastien, NL-2585 HG Den Haag (NL); SCHWERDTNER, Armin, 01259 Dresden (DE)
(86) Internationale Anmeldenummer: PCT/DE2006/000375
(87) Internationale Veröffentlichungsnummer: WO 2006/089542

(56) Entgegenhaltungen:
- WO-A-20/05027534
- WO-A-20/05060270
- DE-A1- 4 309 667
- US-A- 5 771 066
- PATENT ABSTRACTS OF JAPAN Bd. 2000, Nr. 10, 17. November 2000 (2000-11-17) & JP 2000 197075 A (SANYO ELECTRIC CO LTD), 14. Juli 2000 (2000-07-14)
- SON J-Y ET AL: "Parameters for designing autostereoscopic imaging systems based on lenticular, parallax barrier, and integral photography plates" OPTICAL ENGINEERING, SOC. OF PHOTO-OPTICAL INSTRUMENTATION ENGINEERS. BELLINGHAM, US, Bd. 42, Nr. 11, 2003, Seiten 3326-3333, XP002327744 ISSN: 0091-3286
- KIM S-S ET AL: "THE OPTICAL DESIGN AND ANALYSIS FOR SUPER-MULTIVIEW THREE-DIMENSIONAL IMAGING SYSTEM" PROCEEDINGS OF THE SPIE, SPIE, BELLINGHAM, VA, US, Bd. 4297, 22. Januar 2001 (2001-01-22), Seiten 222-226, XP008021778 ISSN: 0277-786X

## Beschreibung

Die Erfindung betrifft ein Verfahren und eine Einrichtung zum Nachführen von Sweet-Spots einer Sweet-Spot-Einheit für ein transmissives elektronisches Display zur Informationsdarstellung, um Licht nach Modulation mit der Information durch das Display gerichtet in Sweet-Spots auf Betrachteraugen für mindestens einen Betrachter abzubilden.

Anwendungsgebiet der Erfindung sind monoskopische und/oder autostereoskopische Displays für einzelne oder mehrere Betrachter. Mit einem Display gemäß der Erfindung können wahlweise Bilder entweder im 2D- oder 3D-Modus oder im gemischten Modus dargestellt werden. Als autostereoskopische Displays werden im Dokument Displays bezeichnet, bei denen mindestens ein Betrachter von wahlfreien Orten aus 3D-Bilder ohne zusätzliche Hilfsmittel sehen kann.

Die Sweet-Spot-Einheit eines Displays umfasst in Ausbreitungsrichtung des Lichts eine Beleuchtungsmatrix mit einer Vielzahl selbstleuchtender oder lichtdurchstrahlter Beleuchtungselemente sowie Abbildungsmittel mit Abbildungselementen. Die Abbildungsmittel bilden das Licht aktivierter Beleuchtungselemente der Beleuchtungsmatrix in Form eines oder mehrerer Sweet-Spots auf Betrachteraugen mindestens eines Betrachters annähernd durch Parallelstrahlenbündel ab. Dafür ist jedem Abbildungselement der Abbildungsmittel eine Vielzahl von Beleuchtungselementen zugeordnet. Sweet-Spots sind die Bereiche, von denen aus eine Information auf dem Informationspanel in einer guten Abbildungsqualität betrachtet werden kann.

Aus den Sweet-Spots heraus soll stets die Homogenität der Darstellung der Informationen auf dem Informationspanel gewährleistet werden und das Übersprechen auf das jeweils andere Auge bei 3D-Informationen vermieden werden. Auch wenn der Betrachter eine neue Position im Raum vor dem Display einnimmt, müssen die genannten Bedingungen weiterhin gelten, so dass ihm Informationen mit monoskopischen oder stereoskopischen Bildinhalten ständig in guter Qualität zur Verfügung stehen. Bei einem monoskopischen Display in einem Fahrzeug soll für den Fahrer beispielsweise ein Routenplan angezeigt werden, während sein Begleiter ein Video sieht. Beide sollen sich in einem gewissen Bereich bewegen können, ohne ihre Information zu verlieren.

Weiterhin hat sich erwiesen, dass schon bei geringen Abweichungen in der Aktivierung der Lichtquellen, d.h. bei geringfügig zu vielen oder zu wenig aktivierten Lichtquellen für einen definierten Sweet-Spot, Störungen und Defekte der Abbildung auftreten. Beispielsweise ändern sich das Übersprechen zwischen verschiedenen Sweet-Spots sowie die Abbildungsqualität, wie beispielsweise die Homogenität und der Kontrast der Ausleuchtung, was vom menschlichen Auge sehr genau erkannt wird.

Von einem autostereoskopischen Display werden neben einer 3D-Darstellung in guter Abbildungsqualität auch Eigenschaften erwartet, die unabhängig von der Anzahl der Benutzer sind, wie hauptsächlich freie und unabhängige Betrachterbeweglichkeit und ein wahlfreier Zugriff auf mehrere Darstellungen im 2D- und/oder 3D-Modus.

Um alle diese Forderungen optimal erfüllen zu können, wird ein geeignetes Nachführungs- bzw. Trackingsystem benötigt, welches Daten für die anschließende Verwertung in Nachführeinrichtungen und zur stereoskopischen Informationsdarstellung zur Verfügung gestellt. Es muss in der Lage sein, ständig die Betrachterbewegungen im Raum vor dem Display in einem möglichst großen Raumbereich zu verfolgen, damit jedem Betrachter stets die ihm zugehörige Bildinformation unabhängig von seiner momentanen Position dargestellt werden kann. Das stellt hohe Anforderungen an die Genauigkeit der Positionsfinder, an die Qualität der einzelnen Elemente des Displays sowie an die Abbildungsqualität des Displays insgesamt.

Es gibt Trackingsysteme, die beispielsweise mit mechanischen, optischen oder anderen Mitteln, allein oder in Kombination, das Nachführen realisieren. Jedoch haften diesen Systemen Nachteile an, die ihre Genauigkeit beeinträchtigen und ihre Verwendung in Echtzeit erschweren. Ihr Aufbau ist oft voluminös und der Raum relativ beschränkt, in dem Betrachtem noch Informationen dargestellt werden können. Daneben verlängern sich die Rechenzeiten erheblich, je mehr Faktoren von der Positionsbestimmung an bis zur Darstellung der Information berücksichtigt werden müssen.

Die Druckschrift WO 03/053072 A1 enthält ein Multi-User-Display mit einem dreidimensionale Positionsdaten erfassenden Trackingsystem und sequentieller Wiedergabe von stereoskopischen Bildern. Im Display sind nacheinander eine dreidimensional adressierbare Hintergrundlichtquelle bzw. Backlight, eine großflächige Abbildungslinse zum Fokussieren des Lichtes auf den Betrachter und ein Lichtmodulator als Bildmatrix angeordnet. Das Backlight wird hier durch in mehreren Ebenen hintereinander angeordnete zweidimensionale Lichtquellenanordnungen gebildet. Entsprechend der aktuellen Betrachterposition werden Beleuchtungselemente ermittelt, die in einer der Lichtquellenanordnungen des Backlights liegen. Damit wird ein Lichtquellentracking auch bezüglich der Entfernung eines oder mehrerer Betrachter vom Display ermöglicht. Dynamisch werden dreidimensionale Positionsdaten aller Betrachteraugen ermittelt, zuordenbare Beleuchtungselemente des Backlights geöffnet und Lichtbündel auf die jeweiligen rechten/ linken Betrachteraugen synchron mit den modulierten Bildern fokussiert.
Das Display besitzt eine verminderte Lichtintensität, da pro Betrachterauge jeweils nur das Licht einer lokal selektierbaren punktförmigen Lichtquelle zum Ausleuchten des gesamten Bildes zur Verfügung steht und die sich ständig im Strahlengang befindenden nichtaktivierten Lichtquellenanordnungen weiteres Licht absorbieren. Abgesehen von seiner räumlichen Ausdehnung ist das dreidimensionale Backlight auch schwierig herzustellen.

Im Dokument US-A-6 014 164 wird ein autostereoskopisches Display für mehrere Betrachter mit einem Lichtquellen-Trackingsystem beschrieben. Die Lichtquellen sind immer paarweise pro Betrachter vorhanden und können in x-, y- und z-Richtung bewegt und so den Positionsänderungen der Betrachter durch ein Steuersystem entsprechend nachgeführt werden. Dadurch ist es möglich, den Betrachtern ständig zeitsequentiell 3D-Darstellungen auf dem Informationspanel zur Verfügung zu stellen. Da es sich hier ebenfalls um ein Lichtquellentracking handelt, treten die schon beschriebenen Nachteile auch bei diesem System auf. Insbesondere ist ein großer Aufwand an Mitteln zum Nachführen erforderlich, da die betrachterbezogenen Lichtquellenpaare für jeden Betrachter einzeln geführt werden. Diese Mittel verhindern gleichzeitig eine flache Bauweise des Displays.

Weiterer Stand der Technik autostereoskopische Anzeige vorrichtungen betraffend ist in WO-A-05/27534, WO-A-94/23340, JP-A-2000-197075 aufgezeigt.

Die bekannten Lösungen für Trackingverfahren können zwar Betrachtern in verschiedenen Raumpositionen eines stereoskopischen Betrachterbereichs Informationen liefern, aber nur mit beträchtlichen Nachteilen. Der Trackingbereich und die in der Bildmatrix auftretende Helligkeit sind eingeschränkt. Außerdem sind die Displays voluminös und erfordern einen relativ großen Aufwand an Mitteln, auch an rechnerischen, zur Realisierung des Trackings. Je mehr Betrachter im Betrachterraum vor dem Display an unterschiedlichen Orten platziert sind, um so größer werden die zu berechnende Datenmenge und der Zeitraum zwischen Positionsermittlung und Bereitstellung von Sweet-Spots. Deshalb ist es üblich, einen bestimmten Teil der Daten nicht mehr in Echtzeit zu berechnen, sondern vorberechnete Daten in einer Look-up-table zu speichern, abzurufen und weiterzuverarbeiten. Mit zunehmender Zahl der Betrachter entsteht aber der Nachteil, dass die Grenze der Speicherkapazität des Systems schnell erreicht und überschritten wird.
Diese hier aufgeführten Nachteile des Standes der Technik sollen mit der vorliegenden Erfindung auf der Grundlage der inversen Strahlberechnung vermieden bzw. verringert werden. Die hier benutzte Methode der inversen Strahlberechnung (sogenanntes ray tracing) bestimmt die Lichtausbreitung auf der Basis der geometrischen Optik. Sie nutzt die Eigenschaft des Lichts, dass Lichtwege umkehrbar sind und damit alle Lichtstrahlen vom Auge aus bis zu dem Punkt zurückverfolgt werden, an dem sie erzeugt wurden.

Aufgabe der Erfindung ist es, bei Displays mit einer Sweet-Spot-Einheit auf nichtmechanischem Weg ein schnelles Nachführen ausgedehnter Sweet-Spots entsprechend der Positionsänderung von Betrachtern in einem relativ großen Bereich zu erreichen und an Orten der Sweet-Spots eine in der Bildmatrix dargestellte Bildinformation für jeden Betrachter stets in guter Abbildungsqualität bei homogener Ausleuchtung des Informationspanels sichtbar zu machen. Gleichzeitig sollen ein vergrößerter Trackingbereich und eine möglichst übersprechungsfreie Bilddarstellung für jeden Betrachter geschaffen werden.
Weiterhin soll die Menge der für ein Trackingverfahren in Echtzeit zu berechnenden Daten minimiert sowie die Menge der vorberechneten und in einer Look-up-table gespeicherten Daten bei einer vertretbaren Rechenzeit so gering wie möglich gehalten werden.

Es ist bekannt, dass Streuung und Beugung von optischen Komponenten im Strahlengang ebenfalls einen großen Einfluss auf die Qualität der Abbildung und damit auch der Ausleuchtung der Sweet-Spots haben. Die Streuung oder Beugung kann durch optische Komponenten gezielt in eine horizontale oder vertikale Richtung oder in alle Richtungen gelenkt werden. Durch einen bewussten Einsatz von Streu- oder Beugungsmitteln soll die Homogenität der Ausleuchtung und damit die Qualität der Sweet-Spots, insbesondere wenn die Struktur der Beleuchtungselemente sehr fein ist, weiter verbessert werden.

Zum Lösen der Aufgabe geht die Erfindung, die in den Ansprüchen 1 und 10 definiert ist, von einem Trackingverfahren für ein Display mit Sweet-Spot-Einheit und Bildmatrix aus, wobei im Strahlengang in Verfahrensschritten, ausgehend von einer dreidimensionalen Bestimmung der Augenpositionen von Betrachtern durch einen Positionsfinder in Echtzeit, regulär angeordnete Beleuchtungselemente einer Beleuchtungsmatrix aktiviert werden, um definierte Sweet-Spots für Betrachteraugen bereit zu stellen.

Erfindungsgemäß wird zur Lösung der Aufgabe im Trackingverfahren die inverse Strahlberechnung, ausgehend von Betrachteraugen über die Bildmatrix und das Abbildungsmittel bis zur Beleuchtungsmatrix, angewandt. Damit werden genau die Beleuchtungselemente der Beleuchtungsmatrix aktiviert, auf die der Betrachter durch die Bildmatrix hindurch blickt. In Verbindung mit dem Abbildungsmittel, aber unabhängig von der Art des verwendeten Abbildungsmittels, erhalten die Betrachteraugen die ihnen zugehörige gerichtete Beleuchtung in Sweet-Spots.
Nach einer kontinuierlichen dreidimensionalen Positionsbestimmung von Augen mindestens eines Betrachters mit einem Positionsfinder werden die ermittelten Positionsdaten einer Steuereinheit zum Ausführen der inversen Strahlberechnung zur Verfügung gestellt. In Abhängigkeit von der Genauigkeit des Positionsfinders und/oder anderen Parametern, vorzugsweise der Entfernung der Betrachteraugen vom Display, wird in der Steuereinheit in diskreten Schritten für die Umgebung jeden Betrachterauges eine Geometrie des benötigten Sweet-Spots durch Festlegen von Referenzpunkten definiert. Die Referenzpunkte sind, auf ein Betrachterauge bezogen, in Anzahl und Anordnung frei wählbar. In der Erfindung wird insbesondere eine rechteckige Anordnung der Referenzpunkte bevorzugt, bei der für mindestens vier Punkte vorzugsweise eines Rechtecks die inverse Strahlberechnung durchgeführt wird. Die Anzahl der Referenzpunkte muß so groß sein, dass ständig eine homogene Ausleuchtung des Sweet-Spots erfolgt, der Berechnungs- und Speicheraufwand aber so gering wie möglich ist. Eine größere Sweet-Spot-Ausdehnung wird z.B. erforderlich, wenn der Betrachter eine größere Entfernung zum Display hat und die Genauigkeit des Positionsfinders bezüglich der Positionsbestimmung sich verringert.

Von jedem Referenzpunkt aus wird von der Steuereinheit eine inverse Strahlberechnung zu Bildpunkten durchgeführt, die auf der Bildmatrix in einem Raster liegen und durch mindestens einen Parameter definiert sind. Vorteilhafterweise bilden nicht alle Bildpunkte die Grundlage der Berechnungen, sondern nur die in einer Zeile liegenden und damit durch einen einzigen Parameter definierten Bildpunkte entsprechend dem vorgegebenen Raster der Bildmatrix.
Die inverse Strahlberechnung wird weiter von den Bildpunkten über das Abbildungsmittel bis zu den Beleuchtungselementen durchgeführt. Mit der Berechnung werden Datensätze mit Adressdaten für jeweils das Beleuchtungselement ermittelt, das von den Abbildungsmitteln in den entsprechenden Referenzpunkt abgebildet wird. Aus den Adressdaten erhält man als weiteren Verfahrensschritt ein Muster von zu aktivierenden Beleuchtungselementen, welches vom Abbildungsmittel als eingangs definierter Sweet-Spot für jedes Betrachterauge abgebildet wird.
Das erfindungsgemäße Verfahren kann sowohl in monoskopischen als auch autostereoskopischen Displays jeweils für mindestens einen Betrachter angewandt werden.

Während die Strahlberechnung für jeden Bildpunkt vorzugsweise für die mittlere Zeile der Bildmatrix in Echtzeit durchgeführt wird, entnimmt die Steuereinheit für den weiteren Strahlenverlauf vorberechnete und gespeicherte Datensätze zum Ermitteln der Adressdaten von Beleuchtungselementen aus einer Nachschlagtabelle bzw. Look-up-table. Die Adressdaten für ein der aktuellen Betrachterposition entsprechendes Muster von Beleuchtungselementen werden von der Steuereinheit durch einen Parametervergleich der Datensätze ermittelt und zum Erzeugen des entsprechenden Sweet-Spots verwendet, wobei der Blickwinkel α den Verlauf eines Strahls von einem Referenzpunkt aus zum betrachteten Bildpunkt der Bildmatrix kennzeichnet. In der Look-up-table ist der Strahlenverlauf für Strahlen von jedem auf einem Raster der Bildmatrix liegenden Bildpunkt und zu jedem Beleuchtungselement der Beleuchtungsmatrix vorberechnet und in Datensätzen gespeichert. Von den Abbildungsmitteln verursachte Abbildungsfehler, wie beispielsweise die Bildfeldkrümmung, werden vorteilhaft in den Datensätzen berücksichtigt, ebenso bekannte Material- und Fertigungstoleranzen sowie die Temperaturabhängigkeit der verwendeten optischen Elemente.

Mit dem Blickwinkel als Parameter wird in der Strahlberechnung vorteilhaft erreicht, dass sich die Anzahl der vorzunehmenden Berechnungen verringern lässt, da ein bestimmter Blickwinkel nicht nur für einen Betrachter in einer Entfernung vom Display, sondern für mehrere Betrachter in verschiedenen Entfernungen zutreffend sein kann. Wenn allen Betrachtern das gleiche Stereobild dargestellt wird, enthalten die Adressdaten vorteilhaft nur zwei separate Listen von Beleuchtungselementen für die ermittelten Positionen jeweils aller linken und aller rechten Augen von Betrachtern.
In der Look-up-table sind praktisch für eine Vielzahl von Strahlen und Blickwinkeln die vorberechneten Datensätze zum Erzeugen der Sweet-Spots für die relevanten Bildpunkte der Bildmatrix und aller Beleuchtungselemente der Beleuchtungsmatrix gespeichert. In ihrer Gesamtheit stellen sie die Transferdaten der Look-up-table dar.

Eine Ausführungsform der Erfindung enthält eine Beleuchtungsmatrix, die aus einem im Subpixelbereich aktivierbaren Shutter in Kombination mit einem gerichteten Backlight besteht. Ebenso können auch einzeln aktivierbare selbstleuchtende Beleuchtungselemente wie LEDs oder OLEDs in der Beleuchtungsmatrix verwendet werden, wodurch dann das Backlight entfällt und die Flachheit des Displays erhalten bleibt.
Weiterhin betrifft die Erfindung eine Einrichtung zum Bereitstellen eines Steuersignals zum Nachführen eines Sweet-Spots einer Sweet-Spot-Einheit für ein Display mit entsprechenden Steuer- und Speichermitteln zur Durchführung des Verfahrens.

Entsprechend einer weiteren Ausführung wird mindestens eine zusätzliche optische Komponente in Form eines Streu- oder Beugungselements im Strahlengang verwendet, wodurch ein zusätzlicher Parameter zur Ermittlung der Adressdaten und damit zur Verbesserung der Qualität der Abbildung und der Homogenität der Ausleuchtung zur Verfügung steht. Die Steuereinheit erfasst und berücksichtigt erfindungsgemäß zusätzlich einen die optischen Eigenschaften des Streu- oder Beugungsmittels definierenden Winkel θ in Winkelbereichen. Der Winkel θ ist der Streuwinkel eines Streumittels aus mindestens einem Streuelement oder der Beugungswinkel eines Beugungsmittels aus mindestens einem Beugungselement.

Da zum Generieren eines Sweet-Spots eine Vielzahl von Strahlen erforderlich ist, wird auch mit einer Vielzahl von auf den Winkel θ bezogenen Winkelbereichen gerechnet. Die Steuereinheit erfasst diese Winkelbereiche vorzugsweise in Abhängigkeit vom Rastermaß der jeweils verwendeten Beleuchtungsmatrix. Das Erfassen und Berücksichtigen der Daten des Winkelbereichs erfolgt zur Vereinfachung des Berechnungsverfahrens dabei unabhängig vom Ort des im Strahlengang angeordneten Streu- oder Beugungsmittels, aber immer an Orten, die von der inversen Strahlberechnung berührt werden. Zur Bereitstellung eines definierten Sweet-Spots werden alle mit der inversen Strahlberechnung ermittelten Beleuchtungselemente der Beleuchtungsmatrix aktiviert.
Durch die erfindungsgemäße Berücksichtigung von Streu- oder Beugungsmitteln bei der Strahlberechnung werden auf einfache Art und Weise zusätzliche Beleuchtungselemente aktiviert. Damit wird erreicht, dass auftretende Defekte der Abbildung, wie dunkle Streifen, Übersprechen und schlechter Bildkontrast, weiter verringert bzw. beseitigt werden.

Durch das erfindungsgemäße Verfahren zum Nachführen eines Sweet-Spots einer Sweet-Spot-Einheit ist es möglich, die Menge der in einer Look-up-table zu speichernden Transferdaten und deren rechnerische Verarbeitungszeit zu verringern. Insbesondere bei der gleichzeitigen Darstellung von Informationen im 2D- und/oder 3D-Modus für mehrere Betrachter, für die der Inhalt der Informationen unterschiedlich ist, können Betrachtern vorteilhaft sehr schnell bei Positionsänderung ihre zugehörigen Bildinformationen mit hoher Qualität in Echtzeit nachgeführt werden.

Das erfindungsgemäße Verfahren und eine dazugehörige Einrichtung werden nachfolgend näher beschrieben. In den Darstellungen zeigen
- Fig. 1: eine Draufsicht auf eine schematische Darstellung eines Multi-User-Displays mit einer Sweet-Spot-Einheit, einer Bildmatrix 4 und einem Betrachterauge 6 in einem Sweet-Spot 5,
- Fig. 2: von Referenzpunkten P₁ bis P₄ eines Sweet-Spots zu Bildpunkten Dₚ und Dᵣ der Bildmatrix 4 verlaufende Lichtstrahlen mit entsprechenden Blickwinkeln α in Draufsicht,
- Fig. 3a: eine Beleuchtungselemente-Liste 7 mit einem Muster M von Beleuchtungselementen LE,
- Fig. 3b: einen Ausschnitt der Beleuchtungsmatrix 1 mit aktivierten und nichtaktivierten Beleuchtungselementen LE
- Fig. 4: in Draufsicht einen im inversen Strahlberechnungsverfahren verfolgten Lichtstrahl RTᵢ, deran einem Streumittel SF in einem Winkelbereich ± θ gestreut wird und dessen gestreute Lichtstrahlen RTᵢ₀ bis RTᵢ₃ zu Beleuchtungselementen LE verlaufen und
- Fig. 5: ein Flussdiagramm zum Verfahrensablauf der inversen Strahlberechnung in einem Display.

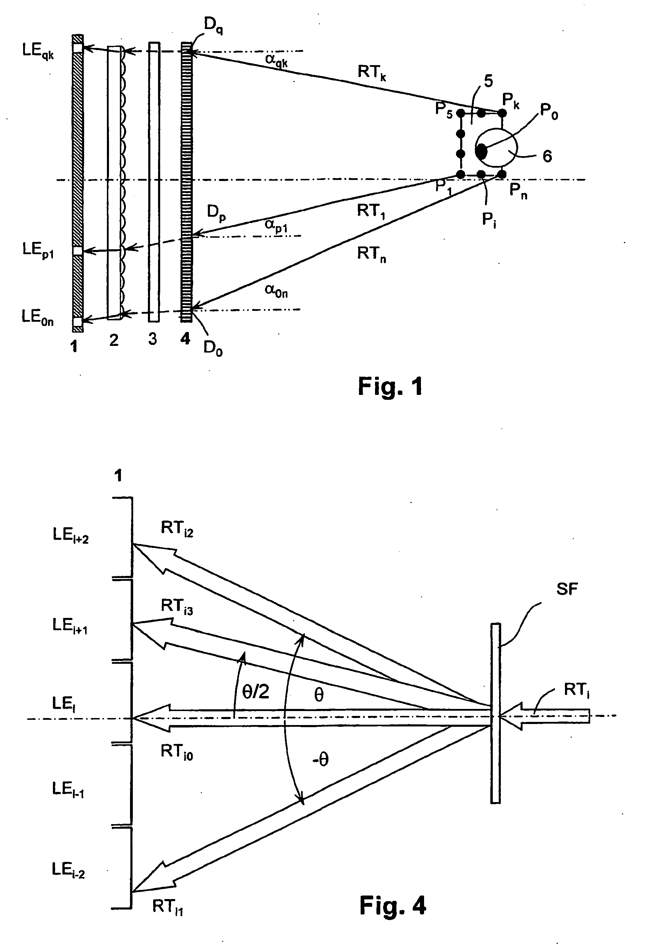

In der Beschreibung wird vorzugsweise auf ein autostereoskopisches Display Bezug genommen.
Anhand der Figuren 1 bis 5 werden für ein autostereoskopisches Display das erfindungsgemäße Verfahren zum Nachführen eines Sweet-Spots 5 einer Sweet-Spot-Einheit bei Änderung der Positionen eines oder mehrerer Betrachter und eine Einrichtung zur Durchführung des Verfahrens näher beschrieben. Dem Verfahren liegt dabei der Gedanke zugrunde, für jede Betrachterposition immer nur die Beleuchtungselemente LE zum Erzeugen von Sweet-Spots zu aktivieren, die die beste Helligkeit und Homogenität für das darzustellende Stereobild bei hoher Bildqualität liefern. Mit dem erfindungsgemäß gestalteten Strahlberechnungsverfahren und dazugehörigen Einrichtungen wird die Aufgabe gelöst.

In Fig. 1 enthält das autostereoskopische Display die Hauptkomponenten Sweet-Spot-Einheit, gebildet aus der Beleuchtungsmatrix 1 mit den Beleuchtungselementen LE₀ₙ bis LE_{qk} und Abbildungsmitteln aus einem Lentikular 2 und einer Fresnellinse 3. Zur Darstellung des Stereobildes dient eine transparente Bildmatrix 4 mit Bildpunkten Dₒ bis D_{q}, die vom unmodulierten Licht der Sweet-Spot-Einheit durchschienen wird. Zur vereinfachten Darstellung enthalten die Figuren nur ein Betrachterauge 6 mit einem Sweet-Spot 5, der durch Referenzpunkte P₀ bis Pₙ gekennzeichnet ist.

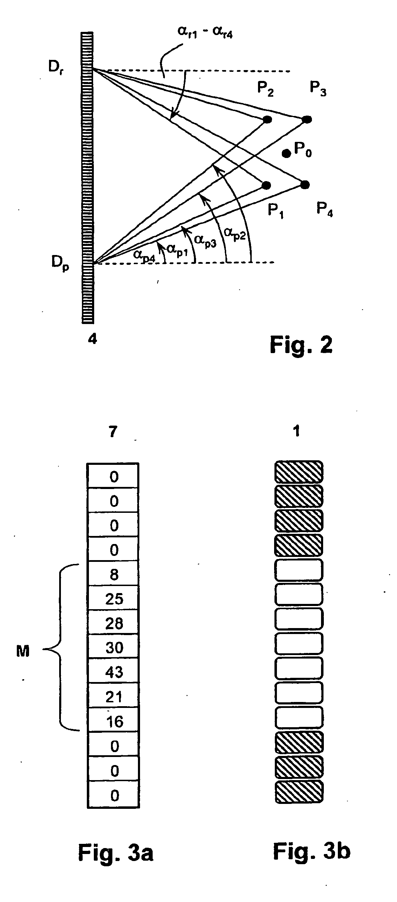

In Fig. 2 werden zur Erklärung des inversen Strahlberechnungsverfahrens Strahlenverläufe angenommen, die jeweils von Referenzpunkten P₁ bis P₄ des Sweet-Spots zu zwei willkürlich ausgewählten Bildpunkten Dᵣ und Dₚ auf der Bildmatrix 4 mit den entsprechenden vier Blickwinkeln αᵣ₁ bis αᵣ₄ und αₚ₁ bis αₚ₄ verlaufen.

Fig. 3a zeigt eine Beleuchtungselemente-Liste 7, in der alle von einer Steuereinheit ermittelten Adressdaten von Beleuchtungselementen LE der Beleuchtungsmatrix 1 berücksichtigt wurden und zu einem Muster M zusammengefasst sind. Entsprechend diesem Muster M werden Beleuchtungselemente LE aktiviert (Fig.3b), die den definierten Sweet-Spot 5 realisieren.

In Fig. 4 ist der Verlauf eines von einem beliebigen Referenzpunkt aus verfolgten Berechnungsstrahls RTᵢ und seine Streuung an einer beispielgebenden Streufolie SF mit dem definierten Streuwinkel θ dargestellt. Es wird gezeigt, wie unter Einbeziehung einer zusätzlichen optischen Komponente mit einem Winkelbereich ± θ und ± θ/2, ausgehend vom Streuwinkel θ am Ort eines Streu- oder Beugungsmittels SF, zusätzliche Beleuchtungselemente LE aktiviert werden können. Der Winkelbereich ± θ wird hier nur in horizontaler Richtung erfasst. Prinzipiell ist diese Vorgehensweise zusätzlich auch noch in vertikaler Richtung möglich.

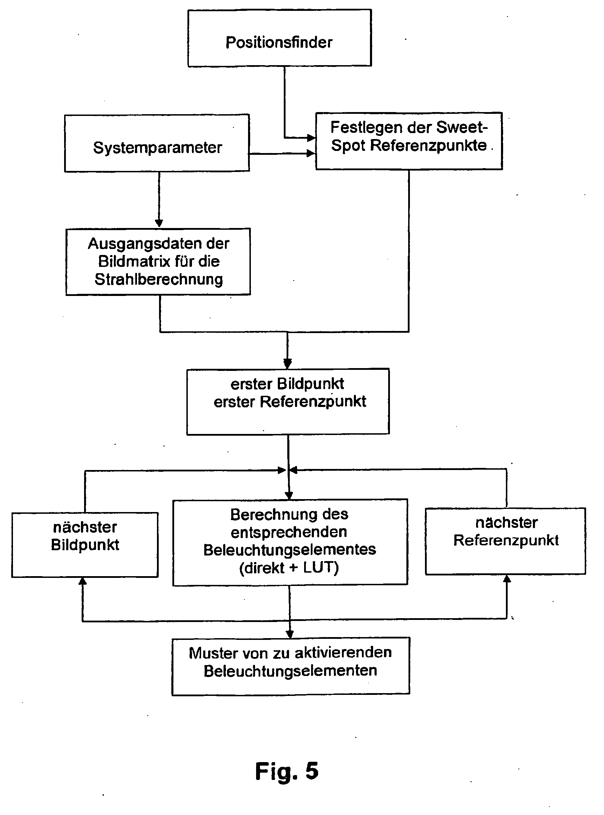

Aus Fig. 5 ist in einem Flussdiagramm der Ablauf der inversen Strahlberechnung in seinen wesentlichen Verfahrensschritten ersichtlich.

Die Beleuchtungsmatrix 1 ist ein wesentliches Element der Sweet-Spot-Einheit eines Multi-User-Displays. Durch sie kann dem Betrachter mit einem Sweet-Spot 5 stets ein optimal homogen ausgeleuchtetes Stereobild auch bei Bewegungen zur Verfügung gestellt werden.
Mit Hilfe der Beleuchtungsmatrix 1, die gemäß Fig. 1 aus einer Vielzahl einzeln aktivierbarer Beleuchtungselemente LE_{0 n} bis LE_{q k} besteht, können der Ort, die Anzahl und auch die Ausdehnungen der zu erzeugenden Sweet-Spots 5 durch eine Steuereinheit realisiert werden. Im dargestellten Ausführungsbeispiel sind die Beleuchtungselemente LE die monochromen Beleuchtungselemente eines LCDs, die Licht von einem nicht dargestellten Backlight erhalten. Sie können aber auch LEDs, OLEDs oder ähnliche punkt- oder spaltförmige, einzeln aktivierbare Beleuchtungselemente in regulärer Anordnung sein.
Das Abbildungsmittel ist mehrteilig ausgeführt und besteht aus einem Lentikular 2 als Abbildungsoptik und einer Fresnellinse 3 in der Funktion einer Feldlinse, welche den Sweet-Spot 5 auf ein Betrachterauge 6 abbildet. Das Abbildungsmittel kann aber auch nur das Lentikular 2 allein sein. Erforderlichenfalls können noch weitere optische Mittel zur Verbesserung der Abbildungsverhältnisse in das Abbildungsmittel integriert werden. Es ist möglich, das Lentikular 2 aus vertikal angeordneten Lentikeln mit mindestens einem weiteren Lentikular mit in horizontaler Richtung angeordneten Lentikeln zu ergänzen. Auch andere Kombinationen von Lentikularen sind möglich. Anstelle des Lentikulars 2 kann auch ein Linsenarray aus matrixförmig angeordneten Linsenelementen verwendet werden oder eine aus prismatischen Elementen bestehende Abbildungsoptik.
In einem weiteren Ausführungsbeispiel kann das Abbildungsmittel zusätzlich ein Korrekturarray zur Korrektur der Bildfeldkrümmung enthalten. Je nach verwendeter Bildmatrix 4 kann zur Anpassung des Polarisationsverhaltens des Lichtes auch eine zusätzliche Retarderfolie in den Abbildungsstrahlengang gebracht werden. Jedem Abbildungselement ist dabei aber immer eine bestimmte Anzahl von Beleuchtungselementen LE zugeordnet.

Im Betrachterraum vor dem Display ist in Fig. 1 in Draufsicht ein Betrachterauge 6 in einem ausgedehnten Sweet-Spot 5 in einer vorgegebenen Ebene dargestellt. Der Sweet-Spot 5 ist zunächst nicht real vorhanden, sondern wird unter Berücksichtigung von Systemparametern und Betrachterbedingungen vordefiniert. Die Sweet-Spot-Ausdehnung ist durch Referenzpunkte P₁ bis Pₙ gekennzeichnet. Die Referenzpunkte P₁ bis Pₙ können auch in einem beliebigen Muster dreidimensional angeordnet sein. Für ein definiertes Rechteck sollte n für die inverse Strahlberechnung z. B. mindestens vier sein, um klar begrenzte Sweet-Spots 5 realisieren zu können. Im Ausführungsbeispiel ist n gleich 12. Die Tiefenausdehnung des Sweet-Spots 5 kann größer oder kleiner sein als hier dargestellt. Das hängt von der Genauigkeit des verwendeten Positionsfinders und/oder der Position des Betrachterauges 6 in Bezug auf das Display ab. Je genauer der Positionsfinder misst, umso kleiner kann die Ausdehnung sein. Der Punkt P₀ gibt genau die Augenposition wieder, die vom Positionsfinder bei der Positionsbestimmung erfasst wird. Bei mehreren Betrachtem werden nacheinander alle im Betrachterraum vorhandenen Augen 6 dynamisch erfasst und deren Positionsdaten der Steuereinheit für die inverse Strahlberechnung zur Verfügung gestellt.

Nach der kontinuierlich dreidimensional in Echtzeit erfolgenden Positionsbestimmung eines Betrachterauges 6 im Punkt P₀ wird für die Umgebung des Auges in diskreten Referenzpunkten P₁ bis Pₙ ein real noch nicht vorhandener Sweet-Spot 5 definiert. Von jedem Referenzpunkt P₁ bis Pₙ aus werden Strahlenverläufe RT₁ bis RTₙ zu Bildpunkten D₀ bis D_{q} einer ausgewählten Zeile der Bildmatrix 4 in der Steuereinheit berechnet (s. Fig. 1). Als Grundlage der Bildpunktberechnungen ist die Bildmatrix 4 in ein Raster mit einem konstanten Pitch unterteilt. Der Pitch kann mit dem Pitch der Bildmatrix 4 identisch sein, muß es aber nicht. Es ist auch ein Raster denkbar, das aus mehreren Bereichen mit unterschiedlichem Pitch besteht. Für die inverse Strahlberechnung ist es aber vorteilhaft, einen größeren Pitch als den der Bildmatrix zu benutzen, weil dadurch erhebliche Rechenkapazität eingespart wird.
Die Bildpunkte D₀ bis D_{q} sind in einer Richtung durch die x-Koordinate der Zeile, auf der sie sich befinden, als Parameter gekennzeichnet. Praktisch wird zur Berechnung die mittlere Zeile der Bildmatrix ausgewählt, da von Betrachtern eine zentrale Blickposition zum Bilddisplay bevorzugt wird. Ein weiterer Parameter der Berechnung ist der Blickwinkel α, mit dem Strahlen von den Referenzpunkten P₁ bis Pₙ zu den Bildpunkten D₀ bis D_{q} des Rasters gelangen. In der Praxis hat sich erwiesen, dass die Anzahl der Blickwinkel α für eine aussagekräftige Berechnung ungefähr 4000 betragen sollte. Nimmt man wesentlich weniger als 4000, würde die Genauigkeit des Trackings negativ beeinträchtigt werden.

Für den Anwendungsfall eines zweidimensionalen Abbildungsmittels werden anstelle der x-Koordinate die x- und y-Koordinaten als Parameter eines Bildpunktes D benutzt.

Im Ausführungsbeispiel gemäß Fig. 1 sind die Beleuchtungselemente LE_{0 n} bis LE_{q k} die monochromen Beleuchtungselemente eines Shutters mit nicht dargestelltem Backlight. Am Ort des Referenzpunktes P₀ befindet sich das Betrachterauge 6. Für die äußeren Referenzpunkte Pₖ und Pₙ sind die Lichtstrahlen entsprechend der Strahlberechnung zu den äußeren Bildpunkten D₀ und D_{q} eingezeichnet. Für den Referenzpunkt P₁ ist der Lichtstrahl zum Bildpunkt Dₚ mit dem Blickwinkel αₚ₁, unter dem er zu einem Rasterpunkt der Bildmatrix 4 gelangt, zu sehen. Der Strahlenverlauf vom Bildpunkt Dₚ, der sich vorzugsweise in der mittleren Zeile der Bildmatrix 4 befindet, passiert das Abbildungsmittel und endet auf der Beleuchtungsmatrix 1 im Beleuchtungselement LEₚ₁. Diese Berechnung wird für alle Bildpunkte D₀ bis D_{q} für eine große Anzahl von Blickwinkeln α durchgeführt. So wird garantiert, dass alle Beleuchtungselemente LE_{0 n} bis LE_{q k} erreicht werden, die für eine homogene Ausleuchtung des mit den Referenzpunkten P₁ bis Pₙ definierten Sweet-Spots 5 notwendig sind. Die von den Lichtstrahlen erreichten Beleuchtungselemente LE_{0 n} bis LE_{q k} werden mit den zugehörigen Spalten aktiviert.
Werden zu wenig Beleuchtungselemente LE_{0 n} bis LE_{q k} aktiviert, ist der Sweet-Spot 5 mit dem zugeschalteten Bild zu wenig ausgeleuchtet. Werden dagegen zu viele Beleuchtungselemente LE_{0 n} bis LE_{q k} aktiviert, beleuchtet der Sweet-Spot 5 zusätzlich das falsche Auge, wodurch ein erhöhtes Stereo-Übersprechen auftritt und der Stereo-Bildkontrast vermindert wird.

Eine weitere Variante für einen definierten Sweet-Spot ist in Fig. 2 zu sehen. Hier ist dargestellt, dass Lichtstrahlen der inversen Strahlberechnung jeweils von vier Referenzpunkten P₁ bis P₄ aus zu zwei verschiedenen Bildpunkten Dᵣ und Dₚ mit unterschiedlichen Blickwinkeln αᵣ₁ bis αᵣ₄ und αₚ₁ bis αₚ₄ verlaufen. Diese Sweet-Spot Konfiguration wird bevorzugt definiert, wenn sich ein Betrachter sehr nahe zum Positionsfinder aufhält und daher die Position des Betrachterauges mit wenigen Referenzpunkten sehr genau bestimmt werden kann.

Als Ergebnis der inversen Strahlberechnung in Echtzeit von Referenzpunkten P eines definierten Sweet-Spots 5 aus bis zu den entsprechenden Bildpunkten D eines Rasters der Bildmatrix 4 erhält man Eingangsdaten für in einer Look-up-table (LUT) vorberechnete und gespeicherte Datensätze.

Die Look-up-table enthält vorberechnete Datensätze, die das Ergebnis der Berechnungen einer großen Anzahl von Strahlenverläufen sind, die alle nach dem gleichen Algorithmus ablaufen und deren Berechnungen in Echtzeit zu viel Zeit kosten würden. Deshalb sind in der LUT alle Strahlenverläufe von jedem Bildpunkt D des Rasters der Bildmatrix 4 durch das Abbildungsmittel hindurch bis zu den zweidimensionalen Koordinaten der Beleuchtungselemente LE der Beleuchtungsmatrix 1 in Datensätzen vorberechnet und gespeichert enthalten.
Es ist aber auch möglich, den Strahlenverlauf in Echtzeit bis zum Lentikular 2 zu berechnen. Dadurch können Datensätze und Speicherkapazität gespart werden.

Durch einen Vergleich der Parameter der in Echtzeit berechneten Datensätze und der vorberechneten Datensätze in der Steuereinheit ermittelt man Adressdaten für jeweils das Beleuchtungselement LE, das vom Lentikular 2 und der Fresnellinse 3 in den entsprechenden Referenzpunkt P abgebildet wird. Dabei kann das gleiche Beleuchtungselement LE mehrfach von Lichtstrahlen getroffen werden, wie es in Fig. 3a in einer Beleuchtungselemente-Liste 7 erkennbar ist. Die Zahl in der Liste gibt an, wie oft ein Beleuchtungselement LE bei der Strahlberechnung von den Referenzpunkten P aus getroffen wurde. Jedoch zählt für das Aktivieren der Beleuchtungselemente LE nicht die Anzahl der Treffer der Lichtstrahlen, sondern es werden generell alle Beleuchtungselemente LE aktiviert, die mindestens einmal durch einen Lichtstrahl RT getroffen werden. Von der Steuereinheit veranlasst, wird aus den Adressdaten ein Muster M aller Beleuchtungselemente LE gebildet, mit denen in der Beleuchtungsmatrix 1 entsprechende Spalten aktiviert werden (s. Fig. 3b). Damit kann für das ausgewählte Betrachterauge 6 am vorbestimmten Ort genau der definierte Sweet-Spot 5 realisiert werden.

Befinden sich mehrere Betrachter vor dem Display, dann wird für die vorhandene Anzahl von Betrachteraugen eine Reihenfolge der zu aktivierenden Muster M von Beleuchtungselementen LE festgelegt. Beispielsweise werden erst alle linken Augen der Betrachter und dann alle rechten Augen mit der inversen Strahlberechnung die entsprechende Stereoinformation erhalten, wenn alle den gleichen Inhalt sehen wollen.

Werden nach dem beschriebenen Verfahren der inversen Strahlberechnung einige Beleuchtungselemente LE nicht aktiviert, sieht man vom Ort des Sweet-Spots 5 aus das Stereobild mit den oben genannten Nachteilen. Man kann z.B. die Ränder der einzelnen Lentikel als dunkle Streifen im Bild erkennen und die Ausleuchtung der Bildmatrix 4 ist nicht homogen. Es hat sich als vorteilhaft erwiesen, zusätzlich die Streuung oder Beugung des Lichtes in der inversen Strahlberechnung zu berücksichtigen.

In einem weiteren Ausführungsbeispiel der Erfindung wird ein Winkel θ eingeführt, der ein Streu- oder ein Beugungswinkel sein kann und in festgelegten Winkelbereichen bei der Strahlberechnung erfasst und berücksichtigt wird. Zur Vereinfachung der weiteren Beschreibung wird die Erfindung im Wesentlichen an einem Streumittel dargestellt, das für andere Anwendungsfälle jederzeit durch das Beugungsmittel ersetzt werden kann. Dem Abbildungsmittel ist im Strahlengang des Displays praktisch ein Streumittel mit mindestens einem Streuelement zugeordnet. Das Streuelement ist beispielsweise als Streufolie SF mit einem definierten Streuwinkel ausgeführt und vor oder hinter der Fresnellinse 3 oder an anderen Orten im Strahlengang angeordnet. Werden mehrere Streufolien SF verwendet, kann jede einen anderen Streuwinkel besitzen, mit dem entsprechend der Darstellung in Fig. 4 zusätzliche Parameter in Winkelbereichen zur Ermittlung von Adressdaten erfasst und berücksichtigt werden können. Analoges gilt für Beugungsmittel und Beugungswinkel.
Es liegt im Rahmen der Erfindung, dass der Winkelbereich auch horizontal und vertikal zur Ermittlung von zusätzlichen Adressdaten erfasst und berücksichtigt werden kann.
Im Ausführungsbeispiel gemäß Fig. 4 wird schematisch und ausschnittsweise für einen inversen Lichtstrahl RTᵢ gezeigt, wie ausgehend vom definierten Streuwinkel θ einer Streufolie SF, ein Winkelbereich ± θ festgelegt wird. Der ausgewählte Lichtstrahl RTᵢ kommt von einem beliebigen Referenzpunkt P und hat die Bildmatrix 4 in einem Bildpunkt D passiert. Er wird an der Streufolie SF gestreut, wodurch mehrere mit einem Pfeil dargestellte Lichtstrahlen RTᵢ₀ bis RTᵢ₃ auf Beleuchtungselemente LEᵢ₋₂ bis LEᵢ₊₂ der Beleuchtungsmatrix 1 treffen. Benutzt man den Winkelbereich ± θ zur Strahlberechnung, wird jedes zweite Beleuchtungselement aktiviert. Halbiert man aber die Winkelbereiche nochmals um beispielsweise den Faktor θ/2 entsprechend Fig. 3, werden mit der inversen Strahlberechnung zusätzlich die Beleuchtungselemente LEᵢ₋₁ und LEᵢ₊₁ von Lichtstrahlen getroffen. Somit kann die Anzahl von zu aktivierenden Beleuchtungselementen LE, die einen Beitrag zur homogenen Ausleuchtung des definierten Sweet-Spots 5 liefern, genauer bestimmt werden und das Risiko des Nichtaktivierens von Beleuchtungselementen LE reduziert sich weiter. Die Anzahl der auf diese Weise zusätzlich zu aktivierenden Beleuchtungselemente ist in der Realität aber sehr viel größer.

Die Größe des jeweils zu verwendenden Winkelbereichs hängt auch von der Rastergröße der verwendeten Beleuchtungsmatrix 1 ab. Je feiner deren Einteilung ist, umso feiner muß der für die Strahlberechnung zu benutzende Winkelbereich auf der Grundlage des aktuellen Streu- oder Beugungswinkels bestimmt werden. Dabei ist aber zu beachten, dass mit feinerer Winkeleinteilung mehr Adressdaten gewonnen werden und sich damit die Rechenzeit erhöhen wird. Deshalb ist es bei der Anwendung der inversen Strahlberechnung wichtig, einen vertretbaren Aufwand von Mitteln und Rechenkapazität einzuhalten und trotzdem eine gute Abbildungsqualität und homogene Ausleuchtung der definierten Sweet-Spots 5 zu erreichen.

Alle ermittelten Werte vieler Winkelbereiche werden von der Steuereinheit zur Ermittlung und Berücksichtigung von Adressdaten benutzt. Damit enthalten die Adressdaten neben der x-Koordinate jeweils einen Blickwinkel α und einen dem Streu- oder Beugungswinkel entsprechenden Winkel θ oder θ/2. Mit den zusätzlich ermittelten Adressdaten erhöht sich die Genauigkeit der zu aktivierenden Mindestanzahl von Beleuchtungselementen LE für die Bereitstellung des definierten Sweet-Spots 5.

In Fig. 5 verdeutlicht ein Flussdiagramm schematisch den Verfahrensablauf der inversen Strahlberechnung, ausgehend von der Positionsbestimmung eines Betrachterauges 6 durch einen Positionsfinder bis zum Muster M der zu aktivierenden Beleuchtungselemente LE zum Realisieren des definierten Sweet-Spots 5.

Zur Erfindung gehört auch eine Einrichtung, die als ein Prozessor mit Baugruppen entsprechend dem unabhängigen Einrichtungsanspruch zum Ausführen der beschriebenen inversen Strahlberechnung ausgebildet ist.

Mit dem erfindungsgemäßen Verfahren zum Nachführen eines Sweet-Spots einer Sweet-Spot-Einheit wird vorteilhaft ein Display geschaffen, bei dem ein optimales Muster von Beleuchtungselementen mit einem Minimum von Daten einen Sweet-Spot in einer Betrachterebene erzeugt, von dem aus der Betrachter eine Information in einer stets homogen ausgeleuchteten Bildmatrix sehen kann. Da bei der inversen Strahlberechnung die Aberrationen berücksichtigt werden, hat das Display vorteilhafterweise sehr geringe Abbildungsfehler.
Die Verwendung der Look-up-table bringt den Vorteil, dass die einzelnen für die Ausleuchtung des Sweet-Spots benötigten Beleuchtungselemente nicht ständig neu berechnet werden müssen. Dadurch kann in Echtzeit schnell und präzise einem Betrachterauge der Sweet-Spot mit dem entsprechenden Stereobild nachgeführt und der Trackingbereich für einen Betrachter vergrößert werden.

### Bezugszeichenliste

- 1 -: Beleuchtungsmatrix
- 2 -: Lentikular
- 3 -: Fresnellinse
- 4 -: Bildmatrix
- 5 -: Sweet-Spot
- 6 -: Betrachterauge
- 7 -: Beleuchtungselemente-Liste
- LE-: Beleuchtungselement
- D -: Bildpunkt
- M -: Muster
- P -: Referenzpunkt
- RT -: Lichtstrahl
- SF -: Streufolie
- α -: Blickwinkel
- θ -: Winkel (Streu- oder Beugungswinkel)

## Patentansprüche

1. Verfahren zum Nachführen von Sweet-Spots einer Sweet-Spot-Einheit einer Bildanzeigevorrichtung
unter Verwendung einer Sweet-Spot-Einheit (1 - 3), die eine Beleuchtungsmatrix (1) mit einer Vielzahl steuerbarer Beleuchtungselemente (LE) und Abbildungsmittel (2, 3) umfasst und dazu dient, von der Beleuchtungsmatrix ausgehendes Licht, das von Bildpunkten einer Bildmatrix (4) mit Bildinformation moduliert wird, gerichtet in Sweet-Spots (5) auf die Augen (6) mindestens eines Betrachters abzubilden,
unter Verwendung eines Positionsfinders zum Ermitteln der Position (P₀) von Betrachteraugen und entsprechender Positionsdaten,
unter Verwendung einer inversen Strahlberechnung zum Ermitteln von zu aktivierenden steuerbaren Beleuchtungselementen entsprechend der detektierten Betrachterposition, und unter Verwendung einer Steuereinheit, die gesteuert durch die Positionsdaten die genannten steuerbaren Beleuchtungselemente für die Sweet-Spots aktiviert,
**dadurch gekennzeichnet, dass** von der Steuereinheit
- mit den Positionsdaten Referenzpunkte (P₀ ... Pₙ) bestimmt werden, die für die Umgebung jedes Betrachterauges (6) einen ausgedehnten Sweet-Spot (5) definieren,
- von jedem Referenzpunkt aus für ausgewählte Bildpunkte (D₀ ... D_{q}) eines vorgegebenen Rasters der Bildmatrix (4) die inverse Strahlberechnung über diese Bildpunkte und die Abbildungsmittel (2, 3) bis zur Beleuchtungsmatrix (1) durchgeführt wird, und
- nur die Beleuchtungselemente (LE₀ₙ ... LE_{qk}) aktiviert werden, welche mit den Abbildungsmitteln den definierten Sweet-Spot (5) bilden, wobei Adressen der zu aktivierenden Beleuchtungselemente mittels Aufruf parameterabhängig vorberechneter Transferdatensätze abgerufen werden, die in Speichermitteln gespeichert sind.

2. Verfahren nach Anspruch 1, bei dem die Steuereinheit die Geometrie der Sweet-Spots (5) in Abhängigkeit von der Position der Betrachteraugen (6) vom Display festlegt.

3. Verfahren nach Anspruch 1, bei welchem die inverse Strahlberechnung von jedem Referenzpunkt (P₀ ... Pₙ) aus zu den ausgewählten Bildpunkten (Dₒ ... D_{q}) für eine zeile der Bildmatrix in Echtzeit durchgeführt wird.

4. Verfahren nach Anspruch 1, bei welchem die inverse Strahlberechnung unter Verwendung des Speichermittels mittels einer Nachschlagetabelle mit gespeicherten Transferdatensätzen erfolgt, wobei die Transferdatensätze aus vorberechneten Strahlenverläufen für Strahlen von jedem Bildpunkt (Dₒ ... D_{q}) der Bildmatrix (4) zu jedem Beleuchtungselement (LE₀ₙ ... LE_{qk}) resultieren, und wobei die Nachschlagetabelle über Parameter adressierbar ist, die den Verlauf eines Strahls von einem Referenzpunkt über einen Bildpunkt zu einem Beleuchtungselement definieren.

5. Verfahren nach Anspruch 4, bei welchem die Steuereinheit für einen jeweiligen Referenzpunkt die Adressdaten eines ihm gemäß der inversen Strahlberechnung zuzuordnenden Beleuchtungselementes mittels Abruf eines in der Nachschlagetabelle gespeicherten Transferdatensatzes bestimmt, wobei die Nachschlagetabelle mit den genannten Parametern adressiert wird.

6. Verfahren nach Anspruch 5, bei welchem die Adressdaten separate Listen von ansteuerbaren Beleuchtungselementen für linke und rechte Betrachteraugen enthalten.

7. Verfahren nach Anspruch 4, bei welchem die inverse Strahlberechnung von einem Bildpunkt zu jedem Referenzpunkt unter Verwendung eines Parameters "Blickwinkel" (α) erfolgt, wobei dieser eine Anzahl von Werten pro Bildpunkt entsprechend der Anzahl der bestimmten Referenzpunkte annimmt.

8. Verfahren nach Anspruch 4, bei welchem die Steuereinheit den Transferdatensätzen zusätzlich einen Parameter "Streu- oder Beugungswinkel" (θ) eines im Strahlengang angeordneten Streu- oder Beugungsmittels in Winkelbereichen zuordnet, wobei der zu verwendende Winkelbereich vom Rastermaß der verwendeten Beleuchtungsmatrix abhängt.

9. Verfahren nach Anspruch 8, bei welchem der Winkelbereich den Transferdatensätzen unabhängig vom Ort, an welchem das Streu- oder Beugungsmittel im Strahlengang angeordnet ist, zugeordnet wird.

10. Einrichtung zum Steuern einer Sweet-Spot-Einheit einer Bildanzeigevorrichtung
mit einer Sweet-Spot-Einheit (1-3), die eine Beleuchtungsmatrix (1) mit einer Vielzahl steuerbarer Beleuchtungselemente (LE) und Abbildungsmittel (2, 3), umfasst und dazu dient, von der Beleuchtungsmatrix ausgehendes Licht durch eine Bildmatrix mit Bildpunkten gerichtet in Sweet-Spots auf Beträchteraugen abzubilden,
mit einem Positionsfinder zum Ermitteln der Position von Betrachteraugen und entsprechender Positionsdaten,
unter Verwendung einer inversen Strahlberechnung zum Ermitteln von zu aktivierenden steuerbaren Beleuchtungselementen entsprechend der detektierten Betrachterposition, und mit einer Steuereinheit, die gesteuert durch die Positionsdaten die genannten steuerbaren Beleuchtungselemente für die Sweet-Spots aktiviert, **gekennzeichnet durch**
- Steuermittel zum Festlegen von Referenzpunkten (P₀ ... Pₙ), die einen ausgedehnten Sweet-Spot (5) für die Umgebung jedes Betrachterauges definieren, zur Durchführung der inversen Strahlberechnung von jedem der Referenzpunkte über ausgewählte Bildpunkte (Dₒ ... D_{q}) eines vorgegebenen Rasters auf der Bildmatrix (4) und die Abbildungsmittel (2, 3) bis zu den Beleuchtungselementen (LE₀ₙ ... LE_{qk}) der Beleuchtungsmatrix (1), und zum Ermitteln der Adressdaten für die Aktivierung nur der Beleuchtungselemente (LE₀ₙ ... LE_{qk}), die zum Bilden des definierten Sweet-Spots (5) benätigt werden, und
- Speichermittel mit einer gespeicherten Nachschlagetabelle mit parameterabhängig vorberechneten Transferdatensätzen für den Strahlenverlauf von den Referenzpunkten über die ausgewählten Bildpunkte (Dₒ ... D_{q}) und über die Abbildungsmittel bis zu den Beleuchtungselementen (LE₀ₙ ... LE_{qk}) zum parametergesteuerten Abruf von Adressdaten für die zu aktivierenden Beleuchtungselemente.

11. Einrichtung nach Anspruch 10, bei der mindestens ein Streu- oder Beugungsmittel mit einem Streu- oder Beugungswinkel (θ) an einem beliebigen Ort im Strahlengang angeordnet ist, durch dessen optische Eigenschaft zusätzliche Adressdaten für zusätzlich zu aktivierende Beleuchtungselemente bestimmt werden.

12. Einrichtung nach Anspruch 10, bei der die Beleuchtungsmatrix (1) ein Lichtventil in Kombination mit einer Hintergrundlichtquelle umfasst.

13. Einrichtung nach Anspruch 10, bei der die Beleuchtungsmatrix (1) einzeln aktivierbare selbstleuchtende Beleuchtungselemente (LE₀ₙ ... LE_{qk}) enthält.

14. Autostereoskopische Bildanzeigevorrichtung umfassend eine Vorrichtung nach einem der Ansprüche 10 bis 13.

15. Einrichtung nach Anspruch 14, bei der die Bildanzeigevorrichtung zur Erzeugung von Sweet-Spots für mehrere Beobachter ausgebildet ist.

## Claims

1. Method for tracking sweet spots of a sweet spot unit of a display using a sweet spot unit (1-3), comprising an illumination matrix which consists of a multitude of controllable illumination elements (LE) and imaging means (2, 3) in order to project light starting from the illumination matrix directed in the form of sweet spots (5) on to the eyes (6) of at least one observer, said light being modulated with an image information by pixels of an image matrix (4); using a position finder for detecting the position (P₀) of observer eyes and corresponding position information;
using inverse ray tracing for detecting controllable illumination elements being activated according to the detected observer position, and
using a control unit, which controlled by the position information activates said controllable illumination elements for the sweet spots,
**characterised in that** the control unit
- defines reference points (P₀... Pₙ) with the help of the position information, said reference points describing an extended sweet spot (5) around each observer eye (6),
- performs the inverse ray tracing for selected pixels (D₀ to D_{q}) of an given grid of the image matrix (4) starting at each reference point (P₀ to Pₙ) through these pixels (D₀ to D_{q}) and the imaging means (2, 3) to the illumination matrix (1), and
- activates only such illumination elements (LE₀ₙ to LE_{qk}) which generate the defined sweet spot (5) together with the imaging means, whereby address information of illumination elements which are being activated are recalled by means of call up of the data records which are pre-calculated depending on parameters and stored in storage means.

2. Method according to claim 1 where the control unit defines the geometry of the sweet spots (5) depending on the position of the observer eyes (6) onto the display.

3. Method according to claim 1 where the inverse ray tracing is performed from each reference point (P₀ to Pₙ) to selected pixels (D₀ to D_{q}) which are located in one row of the image matrix (4) in real time.

4. Method according to claim 1 where the inverse ray tracing is performed using the storage means by means of a look-up-table comprising stored data records, where the data records result from pre-calculated ray paths for rays running from each pixel (D₀ to D_{q}) of the image matrix (4) to each illumination element (LE₀ₙ to LE_{qk}), and where the look-up-table is addressable with parameters which define the ray path from a reference point through a pixel to an illumination element.

5. Method according to claim 4 where the control unit defines for a respective reference point the address information of an illumination element which is assigned to the reference point according to the inverse ray tracing, by means of call up a data record which is stored in the look-up-table, where the look-up-table is addressed with the said parameters.

6. Method according to claim 5 where the address information include separate lists of controllable illumination elements for left and for right observer eyes.

7. Method according to claim 4 where the inverse ray tracing is carried out from one pixel to each reference point using a viewing angle (α), where the viewing angle takes a number of values for each pixel according to the number of the defined reference points.

8. Method according to claim 4 where the control unit assigns additionally a parameter "diffusion or diffraction angle" (θ) of a diffusion or diffraction means, which is arranged in the optical path, in angular ranges to the data records, where the angular range being used is depended on the grid size of the actually used illumination matrix.

9. Method according to claim 8 where the angular range is assigned to the data records independently of the position at which the diffusion means or the diffraction means is disposed in the optical path.

10. Device for controlling a sweet spot unit for a display
with a sweet spot unit (1-3), comprising an illumination matrix which consists of a multitude of controllable illumination elements (LE) and imaging means (2, 3) in order to project light starting from the illumination matrix through an image matrix comprising pixels directed in the form of sweet spots on to the eyes of observers;
with a position finder for detecting the position of observer eyes and corresponding position information;
using inverse ray tracing for detecting controllable illumination elements being activated according to the detected observer position, and with a control unit, which controlled by the position information activates said controllable illumination elements for the sweet spots, **characterised in that** it comprises
- control means to define reference points (P₀ to Pₙ) which define an extended sweet spot (5) around each observer eye and to carry out inverse ray tracing from each of the reference points trough the selected pixels (D₀ to D_{q}) in a given grid on the image matrix (4) and the imaging means to the illumination elements (LE₀ₙ to LE_{qk}) of the illumination matrix (1), and to find address information for activating only such illumination elements (LE₀ₙ to LE_{qk}) which are used to form the defined sweet spot (5), and
- storage means for calling up controlled depending on parameters the address information which are used to activate the illumination elements, said storage means comprise a stored look-up-table containing data records which are pre-calculated dependent on parameters for the ray path from the reference points through the selected pixels (D₀ to D_{q}) and through the imaging means on to the illumination elements (LE₀ₙ to LE_{qk}).

11. Device according to claim 10 where at least one diffusion or diffraction means having a diffusion or diffraction angle (θ) is disposed in the ray path on an arbitrary position to find additional address information for illumination elements to be activated additionally due to the optical properties of the diffusion or diffraction means.

12. Device according to claim 10 where the illumination matrix (1) is a shutter combined with a directed backlight.

13. Device according to claim 14 where the illumination matrix (1) consists of light-emitting illumination elements (LE₀ₙ to LE_{qk}) which can be activated discretely.

14. Autostereoscopic display comprising a device according to one of the claims 10 to 13.

15. Device according to claim 14 where the display is carried out to generate sweet spots for several observers.

## Revendications

1. Procédé d'ajustement de points idéaux d'une unité de points idéaux d'un dispositif d'affichage d'image
en utilisant une unité de points idéaux (1 à 3) qui comprend une matrice d'éclairage (1) avec une pluralité d'éléments d'éclairage (LE) et des moyens de projection (2, 3) pouvant être commandés et sert à projeter de la lumière sortant de la matrice d'éclairage, qui est modulée par des points d'image d'une matrice d'image (4) comportant des informations sur l'image, dirigée dans des points idéaux (5) vers les yeux (6) d'au moins un observateur,
en utilisant un indicateur de position pour déterminer la position (P₀) des yeux de l'observateur et les données de position correspondantes,
en utilisant un calcul de rayonnement inverse pour déterminer des éléments d'éclairage pouvant être commandés, à activer selon la position de l'observateur détectée, et en utilisant une unité de commande qui active de manière commandée par les données de position les éléments d'éclairage pouvant être commandés cités pour les points idéaux,
**caractérisé en ce que** par l'unité de commande
- des points de référence (P₀ à Pₙ) sont déterminés à l'aide des données de position, lesquels définissent un point idéal (5) étendu pour l'environnement de chaque oeil de l'observateur (6),
- le calcul de rayonnement inverse est réalisé par le biais de ces points d'image et des moyens de projection (2, 3) jusqu'à la matrice d'éclairage (1) à partir de chaque point de référence pour des points d'image (Dₒ à D_{q}) sélectionnés d'une trame prescrite de la matrice d'image (4), et
- seuls les éléments d'éclairage (LE₀ₙ à LE_{qk}) sont activés, lesquels forment avec les moyens de projection le point idéal (5) défini, des adresses des moyens d'éclairage à activer étant appelées au moyen de l'appel d'ensembles de données de transfert calculés au préalable en fonction des paramètres, qui sont enregistrés dans des moyens d'enregistrement.

2. Procédé selon la revendication 1, dans lequel l'unité de commande détermine la géométrie des points idéaux (5) en fonction de la position des yeux de l'observateur (6) par rapport à l'écran.

3. Procédé selon la revendication 1, dans lequel le calcul de rayonnement inverse est réalisé en temps réel à partir de chaque point de référence (P₀ à Pₙ) vers les points d'image (Dₒ à D_{q}) sélectionnés pour une ligne de la matrice d'image.

4. Procédé selon la revendication 1, dans lequel le calcul de rayonnement inverse est effectué en utilisant le moyen d'enregistrement au moyen d'un tableau de référence comportant des ensembles de données de transfert calculés au préalable, les ensembles de données de transfert résultant des trajectoires calculées au préalable pour des rayons de chaque point d'image (Dₒ à D_{q}) de la matrice d'image (4) à chaque élément d'éclairage (LE₀ₙ à LE_{qk}), et le tableau de référence pouvant être adressé par le biais de paramètres qui définissent la trajectoire d'un rayon depuis un point de référence, en passant par un point d'image, à un élément d'éclairage.

5. Procédé selon la revendication 4, dans lequel l'unité de commande pour un point de référence respectif détermine les données d'adresse d'un élément d'éclairage à lui associer selon le calcul de rayonnement inverse au moyen de l'appel d'un ensemble de données de transfert enregistré dans le tableau de référence, le tableau de référence étant adressé avec les paramètres cités.

6. Procédé selon la revendication 5, dans lequel les données d'adresse contiennent des listes séparées d'éléments d'éclairage pouvant être commandés pour des yeux d'observateur gauche et droit.

7. Procédé selon la revendication 4, dans lequel le calcul de rayonnement inverse est effectué d'un point d'image à chaque point de référence en utilisant un paramètre « angle de vision » (α), celui-ci acceptant un nombre de valeurs par image de point selon le nombre des points de référence déterminés.

8. Procédé selon la revendication 4, dans lequel l'unité de commande associe aux ensembles de données de transfert en outre un paramètre « angle de dispersion ou de diffraction » (θ) d'un moyen de dispersion ou de diffraction disposé dans le trajet de rayon dans des zones angulaires, la zone angulaire à utiliser dépendant de la dimension de trame de la matrice d'éclairage utilisée.

9. Procédé selon la revendication 8, dans lequel la zone angulaire est associée aux ensembles de données de transfert indépendamment de l'endroit, où le moyen de dispersion ou de diffraction est disposé dans le trajet de rayon.

10. Dispositif de commande d'une unité de points idéaux d'un dispositif d'affichage d'image
avec une unité de points idéaux (1 à 3) qui comprend une matrice d'éclairage (1) avec une pluralité d'éléments d'éclairage (LE) et de moyens de projection (2, 3) pouvant être commandés et sert à projeter de la lumière sortant de la matrice d'éclairage, dirigée par une matrice d'image comportant des points d'image vers des yeux d'observateur dans des points idéaux,
avec un indicateur de position pour déterminer la position des yeux de l'observateur et les données de position correspondantes,
en utilisant un calcul de rayonnement inverse pour déterminer des éléments d'éclairage pouvant être commandés à activer selon la position de l'observateur détectée, et avec une unité de commande qui active de manière commandée par les données de position les éléments d'éclairage pouvant être commandés cités pour les points idéaux, **caractérisé par**
- des moyens de commande pour déterminer des points de référence (P₀ à Pₙ) qui définissent un point idéal (5) étendu pour l'environnement de chaque oeil de l'observateur, pour réaliser le calcul de rayonnement inverse de chacun des points de référence par le biais de points d'image (Dₒ à D_{q}) sélectionnés d'une trame prescrite sur la matrice d'image (4) et les moyens de projection (2, 3) jusqu'aux éléments d'éclairage (LE₀ₙ à LE_{qk}) de la matrice d'éclairage (1) et pour déterminer les données d'adresse pour la seule activation des éléments d'éclairage (LE₀ₙ à LE_{qk}) qui sont nécessaires à la formation du point idéal défini (5), et
- des moyens d'enregistrement avec un tableau de référence enregistré comportant des ensembles de données de transfert calculés au préalable en fonction des paramètres pour la trajectoire de rayon des points de référence en passant par les points d'image (Dₒ à D_{q}) sélectionnés et les moyens de projection aux éléments d'éclairage (LE₀ₙ à LE_{qk}) pour appeler de manière commandée par les paramètres les données d'adresse pour les éléments d'éclairage à activer.

11. Dispositif selon la revendication 10, dans lequel au moins un moyen de dispersion ou de diffraction est disposé à un angle de dispersion ou de diffraction (θ) à un endroit quelconque dans le trajet de rayon, grâce à la propriété optique duquel des données d'adresse supplémentaires pour des éléments d'éclairage à activer en outre sont déterminées.

12. Dispositif selon la revendication 10, dans lequel la matrice d'éclairage (1) comprend un obturateur de lumière en combinaison avec une source de lumière d'arrière-plan.

13. Dispositif selon la revendication 10, dans lequel la matrice d'éclairage (1) contient des éléments d'éclairage (LE₀ₙ à LE_{qk}) autoluminescents, pouvant être activés individuellement.

14. Dispositif d'affichage d'image autostéréoscopique comprenant un dispositif selon l'une quelconque des revendications 10 à 13.

15. Dispositif selon la revendication 14, dans lequel le dispositif d'affichage d'image est réalisé pour générer les points idéaux pour plusieurs observateurs.
